# EUROPÄISCHE PATENTSCHRIFT

(11) **EP 1 084 461 B1**
(45) Veröffentlichungstag und Bekanntmachung des Hinweises auf die Patenterteilung: **26.03.2003**
(21) Anmeldenummer: 99936350.0
(22) Anmeldetag: 28.05.1999
(51) Int. Cl.: G05B 19/10

(54) **VORRICHTUNG MIT EINEM BETRIEBSPARAMETER, DESSEN WERT ÜBER EINE STEUEREINHEIT VORWÄHLBAR IST**
DEVICE WITH AN OPERATING PARAMETER WHOSE VALUE CAN BE PRESELECTED BY MEANS OF A CONTROL UNIT
DISPOSITIF COMPORTANT UN PARAMETRE DE FONCTIONNEMENT DONT LA VALEUR PEUT ETRE PRESELECTIONNEE PAR L'INTERMEDIAIRE D'UNE UNITE DE COMMANDE

(30) Priorität: 02.06.1998 DE 19824496
(43) Veröffentlichungstag der Anmeldung: 21.03.2001
(73) Patentinhaber: SIEMENS AKTIENGESELLSCHAFT, 80333 München (DE)
(72) Erfinder: SCHOL, Amy, G., D-91077 Dormitz (DE)
(86) Internationale Anmeldenummer: DE9901580
(87) Internationale Veröffentlichungsnummer: WO99063410

(56) Entgegenhaltungen:
- EP-A- 0 190 899
- WO-A-97/15840
- DE-A- 19 617 332
- FR-A- 2 647 926
- FR-A- 2 704 955
- US-A- 4 400 699
- US-A- 4 835 690
- US-A- 5 463 731

## Beschreibung

Die Erfindung betrifft eine Vorrichtung mit einem Betriebsparameter, der in mehreren in Zeitabständen aufeinanderfolgenden Aktivierungsphasen mit einem Wert für die Dauer der Aktivierungsphase wirksam ist, wobei wenigstens der Wert des Betriebsparameters und gegebenenfalls die Länge der Zeitabstände und/oder die Dauer der Aktivierungsphasen über eine Steuereinheit vorwählbar ist und die Steuereinheit eine Anzeigeeinrichtung und Freigabemittel aufweist, wobei die Anzeigeeinrichtung über einer Zeitachse Aktivierungsphasen in Form von Rechtecken anzeigt, wobei die Länge der Rechtecke in Richtung der Zeitachse der Dauer der jeweiligen Aktivierungsphase entspricht und die Abstände der den Ende und den Beginn einer Zeitdauer anzeigenden Flanken aufeinanderfolgender Rechtecke voneinander die Zeitabstände darstellen, und wobei erst nach Betätigung der Freigabemittel der Betriebsparameter in der vorgewählten Weise wirksam werden kann.

Bei einer derartigen aus der FR-A-2 704 955 bekannten Vorrichtung können der Wert des Betriebsparameters für die einzelnen Aktivierungsphasen, die Länge der Zeitabstände zwischen aufeinanderfolgenden Aktivierungsphasen und die Dauer der einzelnen Aktivierungsphasen auf der Anzeigeeinrichtung dargestellt werden, um einer Bedienperson vor Betätigung der Freigabemittel Gelegenheit zu geben, die vorgewählten Einstellungen zu überprüfen. Allerdings gestaltet sich diese Überprüfung schwierig und zeitraubend, sobald eine größere Zahl von Aktivierungsphasen vorgesehen ist.

Vorrichtungen mit einem Betriebsparameter, dessen Wert über eine Steuereinheit vorwählbar ist, sind auch aus der US-A-4 400 699, der EP-A-0 190 899, der FR-A-2 647 926 und der US-A-4,835,690 bekannt, allerdings erfolgt hier keine graphische Anzeige von Aktivierungsphasen.

Der Erfindung liegt die Aufgabe zugrunde, eine Vorrichtung der eingangs genannten Art anzugeben, bei der es einer Bedienperson ermöglicht ist, die vorgewählten Werte rasch und einfach zu überprüfen.

Nach der Erfindung wird diese Aufgabe dadurch gelöst, dass die Rechtecke anzeigen, mit welchem Wert der Betriebsparameter während einer Aktivierungsphase wirksam ist, indem der Wert des Bedienparameters als Höhe der Rechtecke rechtwinklig zu der Zeitachse aufgetragen ist.

Im Falle der Erfindung werden also die vorgewählten Werte des Betriebsparameters in dem Zeitablauf, in dem sie wirksam werden sollen, zweidimensional und gleichzeitig dargestellt, so dass sich eine übersichtliche Darstellung ergibt, die es einer Bedienperson erleichtert, die vorgewählten Werte vor Betätigung der Freigabemittel zu überprüfen. Dabei macht sich die erfindungsgemäße Vorrichtung die Tatsache zunutze, dass das menschliche Auge viel schneller graphische Objekte wahrnehmen als Zeichen lesen kann. Insbesondere was die zeitliche Abfolge und Dauer der Aktivierungsphase angeht, ist die angegebene Art der graphischen Anzeige einer beispielsweise tabellarischen Darstellung überlegen. Im Falle der erfindungsgemäßen Vorrichtung ist somit die klare Darstellung vieler Informationen möglich, ohne dass die Gefahr von Fehlbedienungen besteht. Eine Bedienperson erhält also zusätzliche Sicherheit, dass die Vorrichtung tatsächlich in der Weise aktiviert wird, die von der Bedienperson beabsichtigt ist.

Im Zusammenhang mit der Vermeidung von Fehlbedienungen ist gemäß Varianten der Erfindung vorgesehen, dass die Steuereinheit bezüglich des vorgewählten Wertes des Betriebsparameters und/oder der Dauer der Aktivierungsphasen und/oder der-Zeitabstände zwischen aufeinanderfolgenden Aktivierungsphasen eine Überprüfung der Zulässigkeit der eingestellten Werte durchführt und die Freigabemittel sperrt, falls ein unzulässiger Wert vorgewählt ist. In diesem Zusammenhang kann eine Kennzeichnung von unzulässigen Werten auf der Anzeigevorrichtung erfolgen, so daß eine Bedienperson die kritische Stelle sofort erkennen und Abhilfe schaffen kann. Hierbei kann vorgesehen sein, daß die Steuereinheit den dem unzulässigen vorgewählten Wert am nächsten kommenden zulässigen Wert ermittelt und auf der Anzeigeeinrichtung anzeigt. Dabei können unzulässige Werte von der Steuereinheit durch eine Simulationsrechnung auf Basis eines in der Steuereinheit gespeicherten Modells der Vorrichtung ermittelt werden. Auch bezüglich der von der Steuereinheit vorgeschlagenen, einem unzulässigen vorgewählten Wert am nächsten kommenden zulässigen Werte kann vorgesehen sein, daß die Steuereinheit diese durch Simulationsrechnung ermittelt.

Gemäß einer Ausführungsform der Erfindung ist es möglich, wenigstens einen weiteren Betriebsparameter, der während wenigstens eines Teils der Aktivierungsphasen mit einem jeweils vorwählbaren Wert wirksam ist, auf der Anzeigeeinrichtung darzustellen, wobei der weitere Betriebsparameter als Streifen innerhalb des eine Aktivierungsphase, in der der weitere Betriebsparameter wirksam ist, darstellenden Rechteckes veranschaulicht ist und die Breite des Streifens in Richtung der Zeitachse dem vorgewählten Wert des weiteren Betriebsparameters entspricht.

Vorzugsweise handelt es sich bei der Vorrichtung um ein medizinisches Gerät und hier insbesondere ein eine Röntgenröhre enthaltendes Gerät, vorzugsweise ein Computertomographie(CT)-Gerät oder ein Röntgenangiographiegerät, bei dem als Betriebsparameter der Röhrenstrom der Röntgenröhre oder das mAs-Produkt, als Dauer der Aktivierungsphase die Dauer der Röntgenstrahlung, und als Zeitabstand zwischen aufeinanderfolgenden Aktivierungsphasen die Wartezeit vor aufeinanderfolgenden Aufnahmen einstellbar sind.

Ausführungsbeispiele der Erfindung werden nachfolgend anhand der beigefügten schematischen Zeichnungen erläutert. Es zeigen:
- Fig. 1: das auf der Anzeigeeinrichtung einer erfindungsgemäßen Vorrichtung erscheinende Bild für ein allgemeines Beispiel,
- Fig. 2: das auf der Anzeigeeinrichtung eines erfindungsgemäßen Mikrowellenherdes erscheinende Bild,
- Fig. 3: ein erfindungsgemäßen CT-Gerät in schematischer, teilweise blockschaltbildartiger Darstellung,
- Fig. 4: das auf der Anzeigeeinrichtung des CT-Gerätes gemäß Fig. 4 erscheinende Bild, und
- Fig. 5 bis 7: Varianten der Darstellungsweise gemäß Fig. 1.

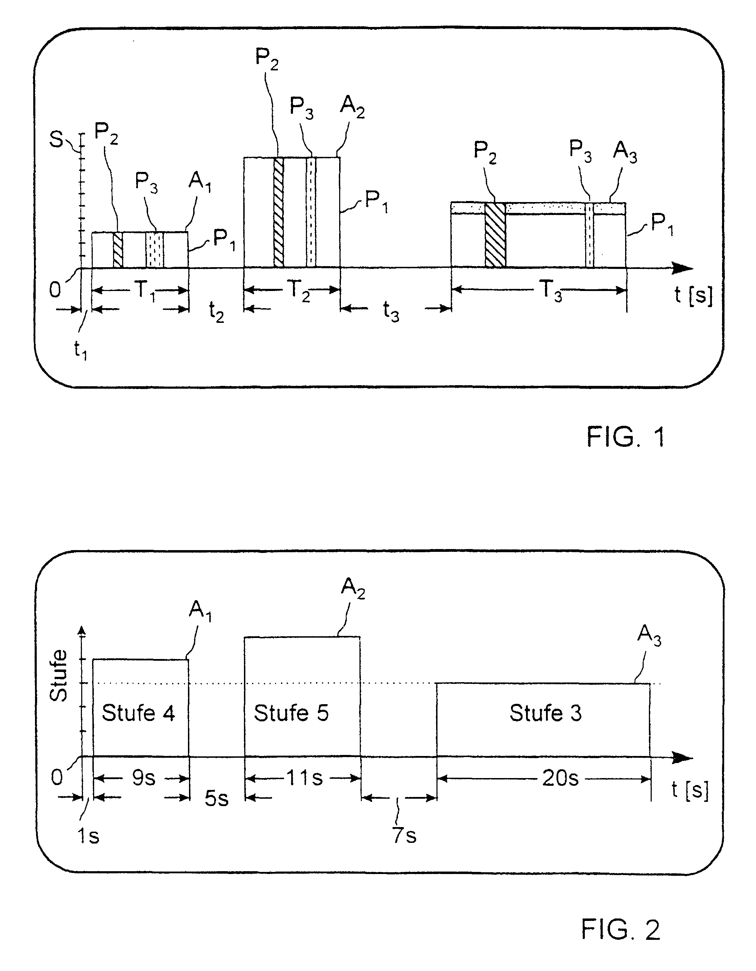

Die Fig. 1 zeigt das auf der Anzeigeeinrichtung einer erfindungsgemäßen Vorrichtung erscheinende Bild für eine Betriebsweise, in der ein Betriebsparameter P₁ in drei aufeinanderfolgenden Aktivierungsphasen A₁ bis A₃ mit unterschiedlichen Werten wirksam wird.

Die Aktivierungsphasen A₁ bis A₃ sind durch auf einer Zeitachse t angeordnete Rechtecke veranschaulicht, wobei die Länge der Rechtecke in Richtung der Zeitachse t der jeweiligen Dauer T₁ bis T₃ der Aktivierungsphasen A₁ bis A₃ entspricht, während die Höhe der Rechtecke quer zur Richtung der Zeitachse t dem Wert entspricht, mit dem der Betriebsparameter P₁ in der jeweiligen Aktivierungsphase A₁ bis A₃ wirksam wird.

Eine mit S bezeichnete Skala für den Wert des Betriebsparameters P₁ ist im Ursprung O der Zeitachse t angebracht.

Die die Aktivierungsphasen A₁ bis A₃ veranschaulichenden Rechtecke sind auf der Zeitachse t derart plaziert, daß der Abstand der ersten Aktivierungsphase A₁ von dem Ursprung O der Zeitachse und die Abstände zwischen aufeinanderfolgenden Aktivierungsphasen A₁ und A₂ bzw. A₂ und A₃ dem Zeitabstand t₁ zwischen dem Ursprung O der Zeitachse t und dem Beginn der Aktivierungsphase A₁, dem Zeitabstand t₂ zwischen dem Ende der Aktivierungsphase A₁ und dem Beginn der Aktivierungsphase A₂ sowie dem Zeitabstand t₃ zwischen dem Ende der Aktivierungsphase A₂ und dem Beginn der Aktivierungsphase A₃ entsprechen.

Es wird also deutlich, daß in sehr übersichtlicher Weise erkennbar ist, in welcher Weise die Vorrichtung aktiviert werden soll.

Im Falle der Aktivierungsphase A₃ ist ein Wert für den Betriebsparameter P₁ vorgewählt, der in dem zum Zeitpunkt der Aktivierungsphase A₃ vorliegenden Betriebszustand der Vorrichtung nicht möglich ist. Dies ist dadurch veranschaulicht, daß ein parallel zur Zeitachse t verlaufender streifenförmiger Bereich des die Aktivierungsphase A₃ veranschaulichenden Rechtecks andersfarbig, in Fig. 1 durch abweichende Schraffur veranschaulicht, dargestellt ist. Dabei ist der Streifen in einer solchen Breite dargestellt, daß die Breite des zwischen dem Streifen und der Zeitachse t verbleibenden Bereichs denjenigen Wert des Betriebsparameters P₁ veranschaulicht, der dem unzulässigen vorgewählten Wert am nächsten kommt.

Es wird also deutlich, daß im Falle der erfindungsgemäßen Vorrichtung im Falle unzulässiger vorgewählter Werte für eine Bedienperson auch eindeutig erkennbar ist, welcher Wert unzulässig ist, und welcher Wert vorgewählt werden müßte, um die Unzulässigkeit zu beseitigen.

In Fig. 1 sind außerdem für die Aktivierungsphasen A₁ bis A₃ die vorgewählten Werte zweier weiterer Betriebsparameter P₂ und P₃ veranschaulicht, und zwar durch in Fig. 1 mit P₂ bzw. P₃ bezeichnete, quer zur Zeitachse t verlaufende Streifen, die in ihrer Farbe von der Farbe der Rechtecke abweichen (wieder durch abweichende Schraffur veranschaulicht) und deren Erstreckung in Richtung der Zeitachse t dem für die jeweilige Aktivierungsphase A₁ bis A₃ vorgewählten Wert des Betriebsparameters P₂ bzw. P₃ entspricht.

Es wird also weiter deutlich, daß es im Falle der erfindungsgemäßen Vorrichtung möglich ist, auch die Werte weiterer Betriebsparameter in anschaulicher und übersichtlicher Weise darzustellen.

In Fig. 2 ist die Erfindung am Beispiel eines erfindungsgemäß ausgebildeten Mikrowellenherdes, von dem in Fig. 2 nur die Anzeigeeinrichtung dargestellt ist, veranschaulicht. Dabei soll der Mikrowellenherd gemäß folgender Tabelle 1 in drei Aktivierungsphasen A₁ bis A₃ betrieben werden.

**Tabelle 1**

| Aktivierungsphase | Verzögerung | Dauer | Stufe |
|---|---|---|---|
| A₁ | 1 s | 9 s | 4 |
| A₂ | 5 s | 11 s | 5 |
| A₃ | 7 s | 20 s | 3 |

Es ist unmittelbar erkennbar, daß die auf der Anzeigeeinrichtung des erfindungsgemäßen Mikrowellenherdes erscheinende und in Fig. 2 veranschaulichte Graphik die vorgewählte Betriebsweise des Mikrowellenherdes wesentlich anschaulicher verdeutlicht, als dies die Tabelle vermag.

Es genügt nämlich bereits ein flüchtiger Blick der Bedienperson, um die vorgewählten Werte zu kontrollieren.

Dabei besteht ein zusätzlicher Vorteil darin, daß die Flächen der die Aktivierungsphasen A₁ bis A₃ veranschaulichenden Rechtecke, die während der jeweiligen Aktivierungsphase A₁ bis A₃ einem zu erwärmenden Gut jeweils zugeführte Wärmemenge veranschaulichen und somit die Gesamtfläche der die Aktivierungsphase A₁ bis A₃ veranschaulichenden Rechtecke die dem zu erwärmenden Gut insgesamt zugeführte Wärme darstellt.

Handelt es sich um eine häufiger verwendete Betriebsweise, kann eine Bedienperson - viel schneller als beim Lesen einer Tabelle - anhand des angezeigten graphischen Musters erkennen, ob die richtige Einstellung gewählt wurde, noch bevor sie den Mikrowellenherd aktiviert.

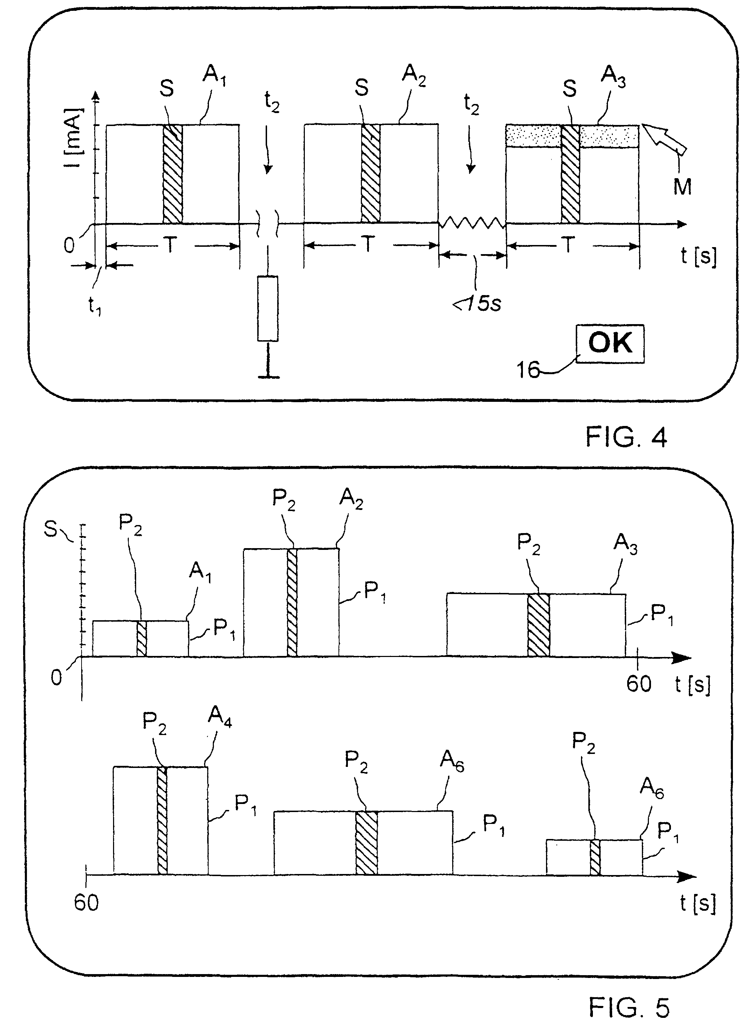

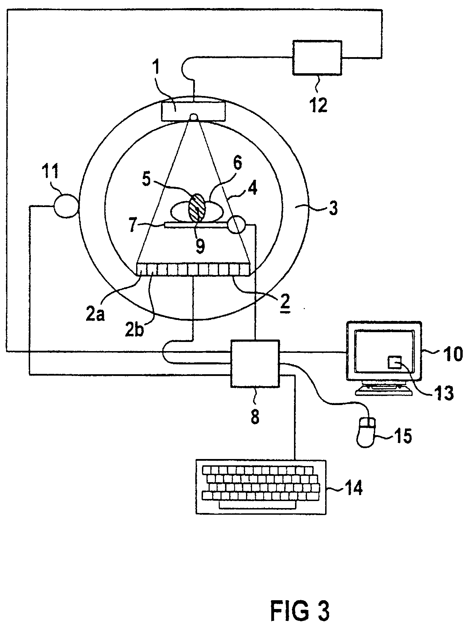

Eine weitere erfindungsgemäße Vorrichtung, die die Steuerung einer Röntgenröhre in einem CT-Gerät betrifft, ist in den Fig. 3 und 4 veranschaulicht.

Gemäß der Fig. 3 weist das CT-Gerät eine Röntgenröhre 1 auf, die zusammen mit einem Detektorsystem 2 eine Strahlenmeßeinrichtung bildet. Das Detektorsystem 2 weist eine Reihe von Einzeldetektoren 2a, 2b usw. auf. Die Röntgenröhre 1 ist mit dem Detektorsystem 2 über einen Drehkranz 3 verbunden und sendet ein fächerförmiges Röntgenstrahlenbündel 4 aus, das eine Schicht 5 eines zu untersuchenden Patienten 6 durchsetzt. Der Patient 6 liegt auf einer Patientenliege 7. Die Anzahl der Einzeldetektoren 2a, 2b usw. des Detektorsystems 2 ist der gewünschten Bildauflösung entsprechend gewählt. Jeder Einzeldetektor 2a, 2b usw. liefert ein elektrisches Signal, das der Intensität der jeweils empfangenen Röntgenstrahlung entspricht.

Einzeldetektoren 2a, 2b usw. des Detektorsystems 2 sind an einer elektronischen Recheneinrichtung 8 angeschlossen, die aus den Ausgangssignalen der Einzeldetektoren 2a, 2b usw. während der Drehung der Strahlenmeßeinrichtung 1, 2 um eine Drehachse 9, die vorzugsweise parallel zur Längsrichtung der Patientenliege 7 verläuft, die Röntgenstrahlungs-Schwächungswerte der Volumenelement der Schicht 5 berechnet. Anhand dieser Röntgenstrahlungs-Schwächungswerte berechnet die Recheneinrichtung 8 ein Schnittbild der untersuchten Schicht 5, das auf einem Sichtgerät 10 wiedergegeben werden kann, wobei einem bestimmten Röntgenstrahlungs-Schwächungswert ein bestimmter Grauwert in der Darstellung des Schnittbildes entspricht. Während der Drehung der Strahlenmeßeinrichtung 1, 2 um die Drehachse 9 wird durch Erfassung der Ausgangssignale der Einzeldetektoren 2a, 2b usw., beispielsweise pro Winkelgrad, ein Satz von Ausgangssignalen des Detektorsystems 2 erzeugt. Auf diese Weise werden bei beispielsweise 512 Einzeldetektoren im Detektorsystem 2 pro Abtastvorgang 260x512 Ausgangssignale erzeugt, die der Berechnung der Röntgenstrahlungs-Schwächungswerte der Volumenelemente der Schicht 5 zugrundegelegt werden. Bei dem dargestellten Ausführungsbeispiel sind der Übersichtlichkeit halber nicht sämtliche Einzeldetektoren, sondern nur einige wenige gezeigt.

Die Drehung des Drehkranzes 3 wird mittels eines Motors 11 bewirkt, der von der elektronischen Recheneinrichtung 8 in der erforderlichen Weise betätigt wird. Die Röntgenröhre 1 wird durch eine Generatoreinrichtung 12 mit den benötigten Strömen versorgt, wobei die Generatoreinrichtung 12 ebenfalls von der elektronischen Recheneinrichtung 8 als Steuereinheit in der erforderlichen Weise gesteuert wird. Zur Steuerung der Röntgenröhre 1 und eventuell auch weiterer Komponenten des CT-Gerätes kann aber auch eine gesonderte Steuereinheit vorgesehen sein.

Auf der Anzeigeeinrichtung 10, eventuell kann für diesen Zweck auch eine gesonderte Anzeigeeinrichtung vorgesehen sein, ist in der in Fig. 4 veranschaulichten Weise zusätzlich ein zumindest einen Teil einer graphischen Bedienoberfläche bildendes Feld 13 dargestellt.

Im Falle des beschriebenen Ausführungsbeispiels kann eine Bedienperson mit Hilfe einer Tastatur 14 und/oder einer Mouse 15 unter anderem folgende Betriebsparameter einstellen:
- Startverzögerung t (s), d.h. Wartezeit vor Aufnahmebeginn,
- Strahlungsdauer T (s)
- Röhrenstrom I (mA), und
- Schichtdicke S (mm).

Bei der Wahl dieser Betriebsparameter ist zu beachten, daß die Anode der Röntgenröhre 1 nur eine begrenzte Wärmespeicherkapazität aufweist. Deshalb ist nicht zu einem beliebigen Zeitpunkt eine beliebige Strahlungsdauer T bei einem beliebigen Röhrenstrom I möglich. Vielmehr resultiert die Strahlungsdauer T, die zu einem bestimmten Zeitpunkt bei einem bestimmten Röhrenstrom I möglich ist, aus der Anfangstemperatur der Anode der Röntgenröhre 1 und damit der Wärmemenge, die die Anode der Röntgenröhre 1 noch aufnehmen kann, bevor eine maximal zulässige Anodentemperatur erreicht und damit die Wärmespeicherkapazität der Anode der Röntgenröhre 1 zumindest vorübergehend erschöpft ist.

Die Startverzögerung t vor Aufnahmebeginn hat nicht immer einen Einfluß auf die Qualität der Untersuchung. Wird aber beispielsweise ein Kontrastmittel verabreicht, so ist es wichtig, daß die Aufnahme zu einem bestimmten Zeitpunkt stattfindet, da sich sonst das Kontrastmittel nicht mehr in dem zu untersuchenden Bereich des Patienten befindet.

Typischerweise werden mehrere Aufnahmen über eine bestimmte Zeit gemacht. Jeder Aufnahme liegt ein Satz der genannten Betriebsparameter zugrunde. Die meisten Untersuchungen sind Routine und werden mehrmals am Tag wiederholt. Im Falle bekannter CT-Geräte ist die Kontrolle der Betriebsparameter aller Aufnahmen mühsam und beim Lesen können leicht Fehler unterlaufen. Im Falle des erfindungsgemäßen CT-Gerätes werden daher die genannten Betriebsparameter in dem Feld 13 der Anzeigeeinrichtung 10 graphisch aufgezeigt, so daß eine Bedienperson anhand des graphischen Musters sehr leicht erkennen kann, ob die gewünschten Betriebsparameter eingestellt sind. Dabei können auch kleinere Unterschiede zuverlässig bemerkt werden.

Bei einer Leberuntersuchung gemäß folgender Tabelle 2

**Tabelle 2**

| Aufnahme | Startverzögerung | Strahlungsdauer | Röhrenstrom | Schichtdicke |
|---|---|---|---|---|
| A₁ | t₁=3 s | T₁=T=14 s | I₁=I=240 mA | S₁=S=5 mm |
| A₂ | -- | T₂=T=14 s | I₂=I=240 mA | S₂=S=5 mm |
| A₃ | t₃=8 s | T₃=T=14 s | I₃=I=240 mA | S₃=S=5 mm |

werden drei Aufnahmen A₁ bis A₃ mit identischen Aufnahmeparametern Strahlungsdauer T, Röhrenstrom I und Schichtdicke S durchgeführt. Lediglich die Startverzögerungen t₁ bis t₃, d.h. die Verzögerung t₁ zwischen Start der Untersuchung und der ersten Aufnahme A₁ beträgt 3 Sekunden, die Startverzögerung t₂ zwischen der ersten Aufnahme A₁ und der zweiten Aufnahme A₂ ist unbestimmt und die Startverzögerung t₃ zwischen der zweiten Aufnahme A₂ und der dritten Aufnahme A₃ soll 8 Sekunden betragen. Die Startverzögerung zwischen der ersten Aufnahme A₁ und der zweiten Aufnahme A₂ ist deshalb unbestimmt, weil wie in Fig. 4 durch die unterbrochene Zeitachse t und eine symbolisch dargestellte Injektionsspritze angedeutet ist, zwischen der ersten Aufnahme A₁ und der zweiten Aufnahme A₂ die Gabe eines Kontrastmittels erfolgt. Die Aufnähme A₁ stellt somit die Leber ohne Kontrastmittel, d.h. im nativen Zustand, dar. Die Aufnahme A₂ zeigt die Leber mit arteriellen Kontrastmittelbolus. Die Verzögerungszeit zwischen der zweiten Aufnahme A₂ und der dritten Aufnahme A₃ ist so gewählt, daß die Aufnahme A₃ die Leber mit portalem Kontrastmittelbolus zeigt.

Die Fig. 4 zeigt den gewünschten Untersuchungsablauf mit den Aufnahmen A₁ bis A₃ und den entsprechenden Parametern Röhrenstrom I, Schichtdicke s, Strahlungsdauer T und Startverzögerung t₁ bis t₃. Dabei enthält die Darstellung in dem Feld 13 zugleich den Hinweis, daß die Startverzögerung zwischen der Aufnahme A₂ und der Aufnahme A₃ zu gering ist. Dies ist dadurch ersichtlich, daß einerseits die Zeitachse zwischen den Aufnahmen A₂ und A₃ gestaucht dargestellt ist und andererseits im Falle der Aufnahme A₃ angezeigt ist, daß bei der gewählten Startverzögerung t₃ der gewählte Strom I zu hoch ist, Dabei ist in zu der Fig. 1 analoger Weise der für die gewählte Startverzögerung t₃ zulässige Röhrenstrom angezeigt, der dem gewünschten Röhrenstrom von 240 mA am nächsten kommt. Außerdem ist in kursiver Schrift angezeigt, daß bei einer Startverzögerung t₃ von mehr als 15 Sekunden die Aufnahme A₃ mit dem eingestellten Röhrenstrom I durchgeführt werden könnte, d.h. die der gewünschten Startverzögerung t₃ von 8 s am nächsten kommt.

Eine Bedienperson kann nun aufgrund der ihr gebotenen Information unter Berücksichtigung der bei dem jeweiligen Patienten vorliegenden physiologischen Gegebenheiten entscheiden, ob sie die Startverzögerung t₃ vergrößern, oder Strahlungsdauer T₃ und Röhrenstrom bezüglich der Aufnahme A₃ so verändern will, daß ein gewünschtes mAs-Produkt erreicht wird. Selbstverständlich besteht auch die Möglichkeit, sowohl die Startverzögerung t₃ als auch das mAs-Produkt der Aufnahme A₃ zu verändern.

Die entsprechenden Änderungen kann die Bedienperson über die Tastatur 14 eingeben. Es besteht aber auch die Möglichkeit, mit Hilfe des Mousezeigers M das die Aufnahme A₃ veranschaulichende Rechteck auf der Zeitachse t zu verschieben und/oder die Dimensionen des Rechtecks unter Beibehaltung eines mAs-Produkts zu verändern.

Sind auch für die Aufnahme A₃ zulässige Parameter gewählt und von der Bedienperson eventuell erforderlich erachtete Änderungen der die anderen Aufnahmen betreffenden Parameter vorgenommen, kann die Bedienperson den eingestellten Untersuchungsablauf freigeben, indem sie mit dem Mousezeiger M auf den in dem Feld 13 dargestellten Freigabeknopf 16 klickt oder die Tastatur 14 entsprechend betätigt. Die Tastatur 14 und die Mouse 15 erfüllen also auch die Funktion von Freigabemitteln. Diese Freigabemittel sind von der Steuereinheit blockiert, solange auch nur ein unzulässiger Betriebsparameter vorliegt.

Daß im Falle des Untersuchungsablaufs gemäß Tabelle 2 für den zum maßgeblichen Zeitpunkt die Startverzögerung t₃ vor der Aufnahme A₃ zu gering und/oder der Röhrenstrom für die Aufnahme A₃ zu hoch ist, ermittelt die Steuereinheit des CT-Gerätes auf Grundlage eines in dem CT-Gerät gespeicherten Modells, das das Betriebsverhalten des CT-Gerätes, insbesondere das Betriebsverhalten der Röntgenröhre 1, beschreibt, durch Simulationsrechnung. Wenn sich die Simulationen auf das Betriebsverhalten der Röntgenröhre 1 beschränken, kann die Simulation durch eine Komponente der Steuereinheit, nämlich den in CT-Geräten üblicherweise vorhandenen Röhrenlastrechner, erfolgen.

Anhand der vorstehenden Ausführungen wird klar, daß die Flächen der die Aufnahmen A₁ bis A₃ veranschaulichenden Rechtekke der dem Patienten während der jeweiligen Aufnahme verabreichten Strahlungsdosis entsprechen und demzufolge die Gesamtfläche der die Aufnahmen A₁ bis A₃ veranschaulichenden Rechtecke der während des Untersuchungsablauf verabreichte Gesamtdosis entsprechen.

Es wird also deutlich, daß eine besonders anschauliche Darstellung dann gewährleistet ist, wenn es sich bei dem quer zur Zeitachse t aufgetragenen Betriebsparameter P₁ um einen Betriebsparameter handelt, dessen Integral über der Zeit eine zusätzliche Aussage liefert, so wie im Falle des in Fig. 2 veranschaulichten Beispiels die Gesamtfläche der Rechtecke proportional zu der dem zu erwärmenden Gut zugeführten Wärmemenge und im Falle des Ausführungsbeispiels gemäß den Fig. 3 und 4 die Gesamtfläche der Rechtecke proportional zu der dem zu untersuchenden Patienten insgesamt zugeführten Strahlungsdosis ist.

Wie aus der Fig. 5 beispielhaft ersichtlich ist, besteht die Möglichkeit, für längere Zeitabläufe die Zeitachse t in mehrere Reihen zu unterteilen.

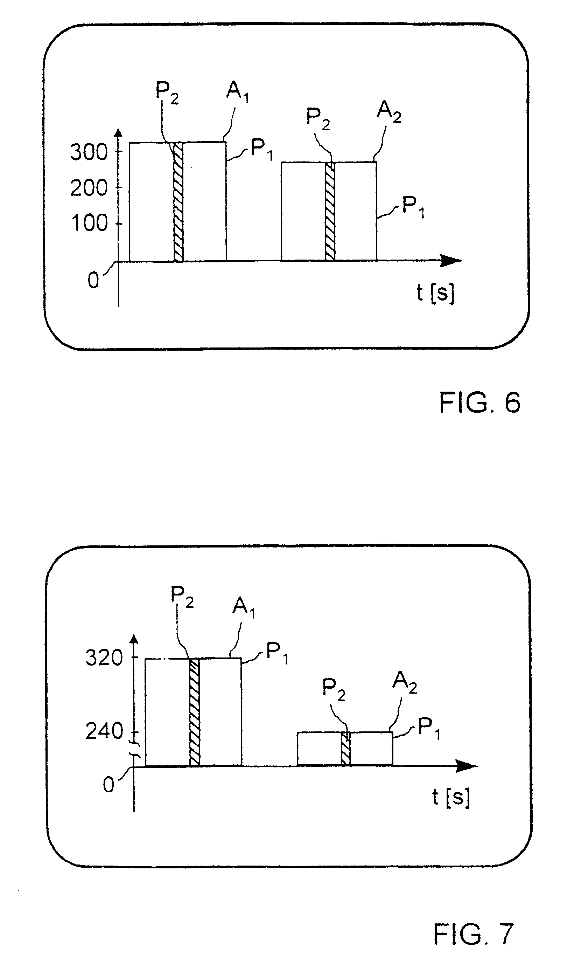

Anhand der Fig. 6 und 7 wird beispielhaft deutlich, daß es wesentlich ist, die Skalierung des die Erstreckung der Rechtecke quer zur Zeitachse t bestimmenden Parameters P₁ so zu wählen, daß die üblichen Einstellungen des Betriebsparameters P₁ leicht zu unterscheiden sind. Wenn wie im Falle der Fig. 6 und 7 eine Einstellung des Parameters P₁ überhaupt nur zwischen den Grenzen 240 und 320 möglich ist, macht es die in Fig. 7 gewählte gespreizte Skalierung des Betriebsparameters P₁ viel einfacher, den jeweils eingestellten Wert dieses Betriebsparameters zu erkennen, als im Falle der Fig. 6 veranschaulichte Darstellungsart mit ungespreizter Skalierung des Betriebsparameters P₁ ist.

Im Falle der vorstehend erläuterten Ausführungsbeispiele verläuft die Zeitachse t jeweils horizontal. Es ist aber auch möglich, eine Darstellung mit vertikaler Zeitachse t zu wählen.

## Patentansprüche

1. Vorrichtung mit einem Betriebsparameter (P₁), der in mehreren in Zeitabständen (t₂, t₃) aufeinanderfolgenden Aktivierungsphasen (A₁ bis A₃) mit einem Wert für die Dauer (T₁ bis T₃) der Aktivierungsphase (A₁ bis A₃) wirksam ist, wobei wenigstens der Wert des Betriebsparameters (P₁) und gegebenenfalls die Länge der Zeitabstände (t₂, t₃) und/oder die Dauer (T₁ bis T₃) der Aktivierungsphasen (A₁ bis A₃) über eine Steuereinheit (8) vorwählbar ist und die Steuereinheit (8) eine Anzeigeeinrichtung (10) und Freigabemittel (14, 15) aufweist, wobei die Anzeigeeinrichtung (10) über einer Zeitachse (t) Aktivierungsphasen in Form von Rechtecken anzeigt, wobei die Länge der Rechtecke in Richtung der Zeitachse (t) der Dauer (T₁ bis T₃) der jeweiligen Aktivierungsphase (A₁ bis A₃) entspricht und die Abstände der das Ende und den Beginn einer Zeitdauer anzeigenden Flanken aufeinanderfolgender Rechtecke voneinander die Zeitabstände (t₂, t₃) darstellen, und wobei erst nach Betätigung der Freigabemittel (14, 15) der Betriebsparameter (P₁) in der vorgewählten Weise wirksam werden kann, **dadurch gekennzeichnet, dass** die Rechtecke anzeigen, mit welchem Wert der Betriebsparameter (P₁) während einer Aktivierungsphase (A₁ bis A₃) wirksam ist, indem der Wert des Betriebsparameters (P₁) als Höhe der Rechtecke rechtwinklig zu der Zeitachse (t) aufgetragen ist.

2. Vorrichtung nach Anspruch 1, bei der für unterschiedliche Aktivierungsphasen (A₁ bis A₃) unterschiedliche Werte des Betriebsparameters (P₁) einstellbar sind.

3. Vorrichtung nach Anspruch 1 oder 2, bei der unterschiedliche Dauern (T₁ bis T₃) für die Aktivierungsphasen (A₁ bis A₃) einstellbar sind.

4. Vorrichtung nach einem der Ansprüche 1 bis 3, bei der unterschiedliche Zeitabstände (t₂, t₃) zwischen jeweils aufeinanderfolgenden Aktivierungsphasen (A₁ bis A₃) einstellbar sind.

5. Vorrichtung nach einem der Ansprüche 1 bis 4, bei der die Steuereinheit (8) für die einzelnen Aktivierungsphasen (A₁ bis A₃) die Zulässigkeit des vorgewählten Wertes des Betriebsparameters (P₁) überprüft und die Freigabemittel (14, 15) sperrt, falls für wenigstens eine Aktivierungsphase (A₁ bis A₃) ein unzulässiger Wert des Betriebsparameter (P₁) vorgewählt ist.

6. Vorrichtung nach Anspruch 5, bei der eine Aktivierungsphase (A₁ bis A₃) mit einem unzulässigen Wert des Betriebsparameters (P₁) auf der Anzeigeeinrichtung (10) **gekennzeichnet** wird.

7. Vorrichtung nach Anspruch 5 oder 6, bei der in der Steuereinheit (8) ein Modell der Vorrichtung gespeichert ist, auf dessen Grundlage die Steuereinheit (8) für die vorgewählten Werte des Betriebsparameters (P₁) und für die geltenden Werte der Zeitabstände (t_{2,} t₃) sowie der Dauer (T₁ bis T₃)der Aktivierungsphasen (A₁ bis A₃) durch eine Simulationsrechnung die Zulässigkeit der vorgewählten Werte des Betriebsparameters (P₁) überprüft.

8. Vorrichtung nach Anspruch 6 oder 7, bei der die Steuereinheit (8) für eine Aktivierungsphase (A₁ bis A₃) mit einem unzulässigen Wert des Betriebsparameters (P₁) den dem vorgewählten Wert des Betriebsparameters (P₁) am nächsten kommenden zulässigen Wert des Betriebsparameters (P₁) ermittelt und auf der Anzeigeeinrichtung (10) anzeigt.

9. Vorrichtung nach Anspruch 7 und 8, bei der die Steuereinheit (8) den einem unzulässigen vorgewählten Wert Betriebsparameters (P₁) am nächsten kommenden zulässigen Wert durch eine Simulationsrechnung ermittelt.

10. Vorrichtung nach einem der Ansprüche 1 bis 9, bei der die Steuereinheit (8) für die einzelnen Aktivierungsphasen (A₁ bis A₃) die Zulässigkeit der vorgewählten Dauer (T₁ bis T₃) der Aktivierungsphase (A₁ bis A₃) überprüft und die Freigabemittel (14, 15) sperrt, falls für wenigstens eine Aktivierungsphase (A₁ bis A₃) ein unzulässiger Wert für die Dauer (T₁ bis T₃) der Aktivierungsphase (A₁ bis A₃) vorgewählt ist.

11. Vorrichtung nach Anspruch 10, bei der eine Aktivierungsphase (A₁ bis A₃) mit einer unzulässigen Dauer (T₁ bis T₃) der Aktivierungsphase (A₁ bis A₃) auf der Anzeigeeinrichtung (10) **gekennzeichnet** wird.

12. Vorrichtung nach Anspruch 10 oder 11, bei der in der Steuereinheit (8) ein Modell der Vorrichtung gespeichert ist, auf dessen Grundlage die Steuereinheit (8) für die vorgewählten Werte der Dauer (T₁ bis T₃) der Aktivierungsphasen (A₁ bis A₃) und für die geltenden Werte des Betriebsparameters (P₁) sowie der Zeitabstände (t_{2,} t₃) durch eine Simulationsrechnung die Zulässigkeit der vorgewählten Werte überprüft.

13. Vorrichtung nach Anspruch 12, bei der die Steuereinheit (8) für eine Aktivierungsphase (A₁ bis A₃) mit einer unzulässigen Dauer (T₁ bis T₃) der Aktivierungsphase (A₁ bis A₃) die der vorgewählten Dauer (T₁ bis T₃) der Aktivierungsphase (A₁ bis A₃) am nächsten kommenden zulässigen Wert der Dauer (T₁ bis T₃) der Aktivierungsphase (A₁ bis A₃) ermittelt und auf der Anzeigeeinrichtung (10) anzeigt.

14. Vorrichtung nach Anspruch 12 und 13, bei der die Steuereinheit (8) den einer unzulässigen Däuer (T₁ bis T₃) der Aktivierungsphase (A₁ bis A₃) am nächsten kommenden zulässigen Wert durch eine Simulationsrechnung ermittelt.

15. Vorrichtung nach einem der Ansprüche 1 bis 14, bei der die Steuereinheit (8) die Zulässigkeit der vorgewählten Zeitabstände (t₂, t₃) zwischen aufeinanderfolgenden Aktivierungsphasen (A₁ bis A₃) überprüft und die Freigabemittel (14, 15) sperrt, falls für wenigstens einen Zeitabstand (t₂, t₃). ein unzulässiger Wert vorgewählt ist.

16. Vorrichtung nach Anspruch 15, bei der ein Zeitabstand (t₂, t₃) mit einem unzulässigen Wert auf der Anzeigeeinrichtung (10) **gekennzeichnet** wird.

17. Vorrichtung nach Anspruch 15 oder 16, bei der in der Steuereinheit (8) ein Modell der Vorrichtung gespeichert ist, auf dessen Grundlage die Steuereinheit (8) für die vorgewählten Werte der Zeitabstände (t₂, t₃) und für die geltenden Werte des Betriebsparameters (P₁) sowie der Dauer (T₁ bis T₃)der Aktivierungsphasen (A₁ bis A₃) durch eine Simulationsrechnung die Zulässigkeit der vorgewählten Werte überprüft.

18. Vorrichtung nach Anspruch 17, bei der die Steuereinheit (8) für einen Zeitabstand (t₂, t₃) mit einem unzulässigen Wert den dem vorgewählten Wert am nächsten kommenden zulässigen Wert ermittelt und auf der Anzeigeeinrichtung (10) anzeigt.

19. Vorrichtung nach Anspruch 17 und 18, bei der die Steuereinheit (8) den einem unzulässigen vorgewählten Wert Zeitabstandes (t₂, t₃) am nächsten kommenden zulässigen Wert durch eine Simulationsrechnung ermittelt.

20. Vorrichtung nach einem der Ansprüche 1 bis 19, bei der wenigstens ein weiterer Betriebsparameter (P₂, P₃) einstellbar ist, der während wenigstens eines Teils der Aktivierungsphasen (A₁ bis A₃) mit einem jeweils vorwählbaren Wert wirksam ist, wobei der weitere Betriebsparameter (P₂, P₃) als Streifen innerhalb des eine Aktivierungsphase (A₁ bis A₃), in der der weitere Betriebsparameter (P₂, P₃) wirksam ist, darstellenden Rechteckes veranschaulicht ist und die Breite des Streifens in Richtung der Zeitachse dem vorgewählten Wert des weiteren Betriebsparameters (P₂, P₃) entspricht.

21. Vorrichtung nach einem der Ansprüche 1 bis 20, welche ein medizinisches Gerät ist.

22. Vorrichtung nach Anspruch 21, welche eine Röntgenröhre (1) enthält und bei der als Betriebsparameter der Röhrenstrom (I) der Röntgenröhre (1) oder das mAs-Produkt, als Dauer der Aktivierungsphase die Dauer (T₁ bis T₃) der Röntgenstrahlung, und als Zeitabstand (t₂, t₃) zwischen aufeinanderfolgenden Aktivierungsphasen (A₁ bis A₃) die Wartezeit vor aufeinanderfolgenden Aufnahmen einstellbar sind.

23. Vorrichtung nach Anspruch 22, welche als Computertomographie(CT)-Gerät ausgeführt ist.

24. Vorrichtung nach Anspruch 23, bei der als weiterer Betriebsparameter die Schichtdicke (s) einstellbar ist.

25. Vorrichtung nach Anspruch 22, welche als Röntgenangiographiegerät ausgeführt ist.

## Claims

1. Apparatus with an operating parameter (P₁) that takes effect with a value for the duration (T₁ to T₃) of the activation phase (A₁ to A₃) in a plurality of activation phases (A₁ to A₃) following one another at time intervals (t₂, t₃), whereby at least the value of the operating parameter (P₁) and optionally the length of the time intervals (t₂, t₃) and/or the duration (T₁ to T₃) of the activation phases (A₁ to A₃) is preselectable via a control unit (8), and the control unit (8) has a display device (10) and enable means (14, 15), whereby the display device (10) indicates activation phases in the form of rectangles over a time axis (t), whereby the length of the rectangles in the direction of the time axis (t) corresponds to the duration (T₁ to T₃) of the respective activation phase (A₁ to A₃) and the spacings of the edges of successive rectangles indicating the end and the beginning of a time duration from one another represent the time intervals (t₂, t₃), and whereby the operating parameter (P₁) can take effect in the preselected way only after actuation of the enable means (14, 15), **characterised in that** the rectangles indicate with which value the operating parameter (P₁) is effective during an activation phase (A₁ to A₃), **in that** the value of the operating parameter (P₁) is entered as a height of the rectangles at right angles to the time axis (t).

2. Apparatus according to Claim 1, whereby different values of the operating parameter (P₁) can be set for different activation phases (A₁ to A₃).

3. Apparatus according to Claim 1 or 2, whereby different durations (T₁ to T₃) can be set for the activation phases (A₁ to A₃).

4. Apparatus according to one of Claims 1 to 3, whereby different time intervals (t₂, t₃) can be set between respectively successive activation phases (A₁ to A₃).

5. Apparatus according to one of Claims 1 to 4, whereby the control unit (8) checks the permissibility of the preselected value of the operating parameter (P₁) for the individual activation phases (A₁ to A₃) and inhibits the enable means (14, 15) if an inadmissible value of the operating parameter (P₁) is selected for at least one activation phase (A₁ to A₃).

6. Apparatus according to Claim 5, whereby an activation phase (A₁ to A₃) with an inadmissible value of the operating parameter (P₁) is identified on the display device (10).

7. Apparatus according to Claim 5 or 6, whereby a model of the apparatus is stored in the control unit (8), on the basis of which model the control unit (8) checks the admissibility of the preselected values of the operating parameter (P₁) by a simulation calculation for the preselected values of the operating parameter (P₁) and for the current values of the time intervals (t₂, t₃) as well of the duration (T₁ to T₃) of the activation phases (A₁ to A₃).

8. Apparatus according to Claim 6 or 7, whereby, given an activation phase (A₁ to A₃) with an inadmissible value of the operating parameter (P₁), the control unit (8) determines the allowed value of the operating parameter (P₁) coming closest to the preselected value of the operating parameter (P₁) and displays this on the display device (10).

9. Apparatus according to Claim 7 and 8, whereby the control unit (8) determines the allowed value coming closest to an inadmissible preselected value of the operating parameter (P₁) with a simulation calculation.

10. Apparatus according to one of Claims 1 to 9, whereby the control unit (8) checks the admissibility of the preselected duration (T₁ to T₃) of the activation phase (A₁ to A₃) for the individual activation phases (A₁ to A₃) and inhibits the enable means (14, 15) if an inadmissible value for the duration (T₁ to T₃) of the activation phase (A₁ to A₃) is preselected for at least one activation phase (A₁ to A₃).

11. Apparatus according to Claim 10, whereby an activation phase (A₁ to A₃) with an inadmissible duration (T₁ to T₃) of the activation phase (A₁ to A₃) is identified on the display device (10).

12. Apparatus according to Claim 10 or 11, whereby a model of the apparatus is stored in the control unit (8), on the basis of which model the control unit (8) checks the admissibility of the preselected values by a simulation calculation for the preselected values of the duration (T₁ to T₃) of the activation phases (A₁ to A₃) and for the current values of the operating parameter (P₁) as well as of the time intervals (t₂, t₃).

13. Apparatus according to Claim 12, whereby, given an activation phase (A₁ to A₃) with an inadmissible duration (T₁ to T₃) of the activation phase (A₁ to A₃), the control unit (8) determines the allowed value of the duration (T₁ to T₃) of the activation phase (A₁ to A₃) coming closest to the preselected duration (T₁ to T₃) of the activation phase (A₁ to A₃) and displays this on the display device (10).

14. Apparatus according to Claim 12 and 13, whereby the control unit (8) determines the permitted value coming closest to an inadmissible duration (T₁ to T₃) of the activation phase (A₁ to A₃) with a simulation calculation.

15. Apparatus according to one of Claims 1 to 14, whereby the control unit (8) checks the admissibility of the preselected time intervals (t₂, t₃) between successive activation phases (A₁ to A₃) and inhibits the enable means if an inadmissible value is preselected for at least one time interval (t₂, t₃).

16. Apparatus according to Claim 15, whereby a time interval (t₂, t₃) having an inadmissible value is identified on the display device (10).

17. Apparatus according to Claim 15 or 16, whereby a model of the apparatus is stored in the control unit (8), on the basis of which model the control unit (8) checks the admissibility of the preselected values by a simulation calculation for the preselected values of the time intervals (t₂, t₃) and for the current values of the operating parameter (P₁) as well as the duration (T₁ to T₃) of the activation phases (A₁ to A₃).

18. Apparatus according to Claim 17, whereby the control unit (8) determines the permitted value coming closest to the preselected value for a time interval (t₂, t₃) with an inadmissible value and displays it on the display device (10).

19. Apparatus according to Claim 17 and 18, whereby the control unit (8) determines the permitted value coming closest to an inadmissible preselected value of the time interval (t₂, t₃) with a simulation calculation.

20. Apparatus according to one of Claims 1 to 19, whereby at least one further operating parameter (P₂, P₃) can be set that takes effect with a respectively preselectable value during at least a part of the activation phases (A₁ to A₃), whereby the further operating parameter (P₂, P₃) is shown as a stripe within the rectangle representing an activation phase (A₁ to A₃) in which the further operating parameter (P₂, P₃) takes effect, and the width of the stripe in the direction of the time axis corresponds to the preselected value of the further operating parameter (P₂, P₃).

21. Apparatus according to one of Claims 1 to 20 that is a medical apparatus.

22. Apparatus according to Claim 21 that contains an X-ray tube (1), and whereby the tube current (I) of the X-ray tube (1) or the mAs product can be set as operating parameter, the duration (T₁ to T₃) of the X-radiation can be set as duration of the activation phase and the waiting time before successive exposures can be set as time interval (t₂, t₃) between successive activation phases (A₁ to A₃).

23. Apparatus according to Claim 22 that is implemented as computer tomography (CT) apparatus.

24. Apparatus according to Claim 23, whereby the slice thickness (s) can be set as a further operating parameter.

25. Apparatus according to Claim 22 that is implemented as X-ray angiography apparatus.

## Revendications

1. Dispositif comportant un paramètre de fonctionnement (P₁) qui est actif dans plusieurs phases d'activation (A₁ à A₃) successives à certains intervalles de temps (t₂, t₃) en ayant une valeur pour la durée (T₁ à T₃) de la phase d'activation (A₁ à A₃), dans lequel au moins la valeur du paramètre de fonctionnement (P₁) et éventuellement la longueur des intervalles de temps (t₂, t₃) et/ou la durée (T₁ à T₃) des phases d'activation (A₁ à A₃) peuvent être présélectionnées par l'intermédiaire d'une unité de commande (8) et l'unité de commande (8) comporte un dispositif d'affichage (10) et des moyens de validation (14, 15), dans lequel le dispositif d'affichage (10) affiche des phases d'activation sur un axe des temps (t) sous la forme de rectangles, dans lequel la longueur des rectangles dans la direction de l'axe des temps (t) correspond à la durée (T₁ à T₃) de la phase d'activation respective (A₁ à A₃) et les distances entre des flancs, indiquant la fin et le début d'une durée, de rectangles successifs représentent les intervalles de temps (t₂, t₃) et dans lequel c'est seulement après l'actionnement des moyens de validation (14, 15) que le paramètre de fonctionnement (P₁) sous sa forme présélectionnée peut devenir actif, **caractérisé par le fait que** les rectangles indiquent avec quelle valeur le paramètre de fonctionnement (P₁) est actif pendant une phase d'activation (A₁ à A₃) du fait que la valeur du paramètre de fonctionnement (P₁) est enregistrée comme hauteur des rectangles perpendiculairement à l'axe des temps (t).

2. Dispositif selon la revendication 1, dans lequel des valeurs différentes du paramètre de fonctionnement (P₁) peuvent être réglées pour des phases d'activation (A₁ à A₃) différentes.

3. Dispositif selon la revendication 1 ou 2, dans lequel des durées (T₁ à T₃) différentes pour les phases d'activation (A₁ à A₃) différentes peuvent être réglées.

4. Dispositif selon l'une des revendications 1 à 3, dans lequel des intervalles de temps (t₂, t₃) différents entre des phases d'activation (A₁ à A₃) successives peuvent être réglés.

5. Dispositif selon l'une des revendications 1 à 4, dans lequel l'unité de commande (8) vérifie pour les différentes phases d'activation (A₁ à A₃) la validité de la valeur présélectionnée du paramètre de fonctionnement (P₁) et bloque les moyens de validation (14, 15) si une valeur interdite du paramètre de fonctionnement (P₁) est présélectionnée pour au moins une phase d'activation (A₁ à A₃).

6. Dispositif selon la revendication 5, dans lequel une phase d'activation (A₁ à A₃) ayant une valeur interdite du paramètre de fonctionnement (P₁) est **caractérisée** sur le dispositif d'affichage (10).

7. Dispositif selon la revendication 5 ou 6, dans lequel il est mémorisé dans l'unité de commande (8) un modèle de dispositif à partir duquel l'unité de commande (8) vérifie par un calcul de simulation, pour les valeurs présélectionnées du paramètre de fonctionnement (P₁) et pour les valeurs exprimées des intervalles de temps (t₂, t₃) ainsi que de la durée (T₁ à T₃) des phases d'activation (A₁ à A₃), la validité des valeurs présélectionnées du paramètre de fonctionnement (P₁).

8. Dispositif selon la revendication 6 ou 7, dans lequel l'unité de commande (8) détermine pour une phase d'activation (A₁ à A₃) ayant une valeur interdite du paramètre de fonctionnement (P₁) la valeur autorisée du paramètre de fonctionnement (P₁) qui est la plus proche de la valeur présélectionnée du paramètre de fonctionnement (P₁) et l'affiche sur le dispositif d'affichage (10).

9. Dispositif selon la revendication 7 ou 8, dans lequel l'unité de commande (8) détermine par un calcul de simulation la valeur autorisée la plus proche d'une valeur présélectionnée interdite du paramètre de fonctionnement (P₁).

10. Dispositif selon l'une des revendications 1 à 9, dans lequel l'unité de commande (8) vérifie pour les différentes phases d'activation (A₁ à A₃) la validité de la durée présélectionnée (T₁ à T₃) de la phase d'activation (A₁ à A₃) et bloque les moyens de validation (14, 15) si une valeur interdite pour la durée (T₁ à T₃) de la phase d'activation (A₁ à A₃) est présélectionnée pour au moins une phase d'activation (A₁ à A₃).

11. Dispositif selon la revendication 10, dans lequel une phase d'activation (A₁ à A₃) ayant une durée (T₁ à T₃) interdite de la phase d'activation (A₁ à A₃) est **caractérisée** sur le dispositif d'affichage (10).

12. Dispositif selon la revendication 10 ou 11, dans lequel il est mémorisé dans l'unité de commande (8) un modèle de dispositif à partir duquel l'unité de commande (8) vérifie par un calcul de simulation la validité des valeurs présélectionnées pour les valeurs présélectionnées de la durée (T₁ à T₃) des phases d'activation (A₁ à A₃) et pour les valeurs exprimées du paramètre de fonctionnement (P₁) ainsi que des intervalles de temps (t₂, t₃).

13. Dispositif selon la revendication 12, dans lequel l'unité de commande (8) détermine pour une phase d'activation (A₁ à A₃) ayant une durée (T₁ à T₃) interdite de la phase d'activation (A₁ à A₃) la valeur autorisée de la durée (T₁ à T₃) de la phase d'activation (A₁ à A₃) qui est la plus proche de la durée (T₁ à T₃) présélectionnée de la phase d'activation (A₁ à A₃) et l'affiche sur le dispositif d'affichage (10).

14. Dispositif selon la revendication 12 ou 13, dans lequel l'unité de commande (8) détermine par un calcul de simulation la valeur autorisée la plus proche d'une durée (T₁ à T₃) interdite de la phase d'activation (A₁ à A₃).

15. Dispositif selon l'une des revendications 1 à 14, dans lequel l'unité de commande (8) vérifie la validité des intervalles de temps présélectionnés (t₂, t₃) entre des phases d'activation successives (A₁ à A₃) et bloque les moyens de validation (14, 15) si une valeur interdite est présélectionnée pour au moins un intervalle de temps (t₂, t₃).

16. Dispositif selon la revendication 15, dans lequel un intervalle de temps (t₂, t₃) ayant une valeur interdite est **caractérisé** sur le dispositif d'affichage (10).

17. Dispositif selon la revendication 15 ou 16, dans lequel il est mémorisé dans l'unité de commande (8) un modèle de dispositif à partir duquel l'unité de commande (8) détermine par un calcul de simulation la validité des valeurs présélectionnées pour les valeurs présélectionnées des intervalles de temps (t₂, t₃) et pour les valeurs exprimées du paramètre de fonctionnement (P₁) ainsi que de la durée (T₁ à T₃) des phases d'activation (A₁ à A₃).

18. Dispositif selon la revendication 17, dans lequel l'unité de commande (8) détermine pour un intervalle de temps (t₂, t₃) ayant une valeur interdite la valeur autorisée la plus proche de la valeur présélectionnée et l'affiche sur le dispositif d'affichage (10).

19. Dispositif selon la revendication 17 ou 18, dans lequel l'unité de commande (8) détermine par un calcul de simulation la valeur autorisée la plus proche d'une valeur présélectionnée interdite de l'intervalle de temps (t₂, t3).

20. Dispositif selon l'une des revendications 1 à 19, dans lequel on peut régler au moins un autre paramètre de fonctionnement (P₂, P₃) qui est actif pendant au moins une partie des phases d'activation (A₁ à A₃) avec une valeur pouvant être à chaque fois présélectionnée, l'autre paramètre de fonctionnement (P₂, P₃) étant représenté par une bande à l'intérieur du rectangle qui représente une phase d'activation (A₁ à A₃) pendant laquelle l'autre paramètre de fonctionnement (P₂, P₃) est actif et la largeur de la bande dans la direction de l'axe des temps correspondant à la valeur présélectionnée de l'autre paramètre de fonctionnement (P₂, P₃).

21. Dispositif selon l'une des revendications 1 à 20, qui est un appareil médical.

22. Dispositif selon la revendication 21, qui contient un tube à rayons X (1) et dans lequel on peut régler comme paramètre de fonctionnement le courant de tube (I) du tube à rayons X (1) ou le produit mAs, comme durée de la phase d'activation la durée (T₁ à T₃) du rayonnement du tube et comme intervalle de temps (t₂, t₃) entre des phases d'activation successives (A₁ à A₃) le temps d'attente avant des enregistrements successifs.

23. Dispositif selon la revendication 22, qui est réalisé sous la forme d'un scanner.

24. Dispositif selon la revendication 23, dans lequel on peut régler comme autre paramètre de fonctionnement l'épaisseur de couche (s).

25. Dispositif selon la revendication 22, qui est réalisé sous la forme d'un appareil à angiographie.
